# EUROPEAN PATENT APPLICATION

(11) **EP 1 248 214 A1**
(43) Date of publication of application: **09.10.2002**
(21) Application number: 00993788.9
(22) Date of filing: 24.11.2000
(51) Int. Cl.: G06F 17/60

(54) **COMMUNICATION TERMINAL**

(30) Priority: 11.01.2000 JP 2000002076; 21.01.2000 JP 2000012522
(71) Applicant: Yozan Inc., Tokyo 155-0031 (JP)
(72) Inventor: TAKATORI, Sunao, Setagaya-ku, Tokyo 155-0031 (JP)
(74) Representative: Grünecker, Kinkeldey, Stockmair & Schwanhäusser Anwaltssozietät
(86) International application number: JP0008301
(87) International publication number: WO01052130

(57) **Abstract**

Proper charging can be realized. A television set TV accessible to the Internet comprises a built-in type first communication terminal PD1 through which communication with a charging management company BS can be performed. The charging management company BS is, for example, a communication service company, and performs charging management for a plurality of commodity providing companies SP1-SP3 according to purchasing state of commodities on the appliance TV.

## Description

### FIELD OF THE INVENTION

The present invention relates to a communication terminal which can provide various kinds of chargeable services.

### BACKGROUND OF THE INVENTION

Recently, supply of various kinds of commodities arid services through a communication line, such as the provision of Internet contents and the transaction on the Internet malls, has been rapidly and widely spread. Terminals for the above uses include a personal computer, a mobile communication terminal, and various kinds of household electric appliances. Accordingly, it is highly possible that in future most electronic appliances and other appliances will have a function for purchasing chargeable commodities through a communication line, and therefore, authentication of customers who have bought commodities will be more and more important. However, if operations for the authentication are required at each use of the appliances, there will be less convenience for using the appliances.

The present invention has been made under the above background, and the object of the present invention is to provide a communication terminal to realize proper charging, with the convenience of appliances through which chargeable commodities are provided.

### DISCLOSURE OF THE INVENTION

A communication terminal according to the present invention comprises receiving means for receiving specific information with regard to charging; sending means for sending information on charging to a charging manager; and service means for providing services based on the above information on charging.

Moreover, the above receiving means performs receiving by using an original communication function of the above communication terminal and therefore separate communication means for authentication is not necessary.

The above receiving means performs receiving independently of an original communication function of the above communication terminal and therefore authentication by simple protocol can be achieved.

A fixed type telephone receiver may be used, because the original communication function of the above communication terminal is performed through a fixed line.

Moreover, a communication terminal according to the present invention comprises a first sending means for sending specific information on charging, independently of an original communication function.

Moreover, it comprises a second sending means for sending information on charging to a charging manager by means of the original communication function and therefore, operations of charging both on the services and on the communication terminal can be simultaneously performed.

### BRIEF DESCRIPTION OF DRAWINGS

FIG. 1 is a block diagram showing a system which uses a communication terminal of a first embodiment according to the present invention.

FIG. 2 is a block diagram showing a system which uses a communication terminal of a second embodiment according to the present invention.

FIG. 3 is a block diagram showing a variation of the first and second mobile communication terminals in the system of FIG. 1.

FIG. 4 is a block diagram showing a system which uses a communication terminal of a third embodiment according to the present invention.

FIG. 5 is a flow chart showing the control of the appliance in the first embodiment.

### BEST MODES FOR CARRYING OUT THE INVENTION

Embodiments of a communication terminal according to the present invention will be described with reference to drawings.

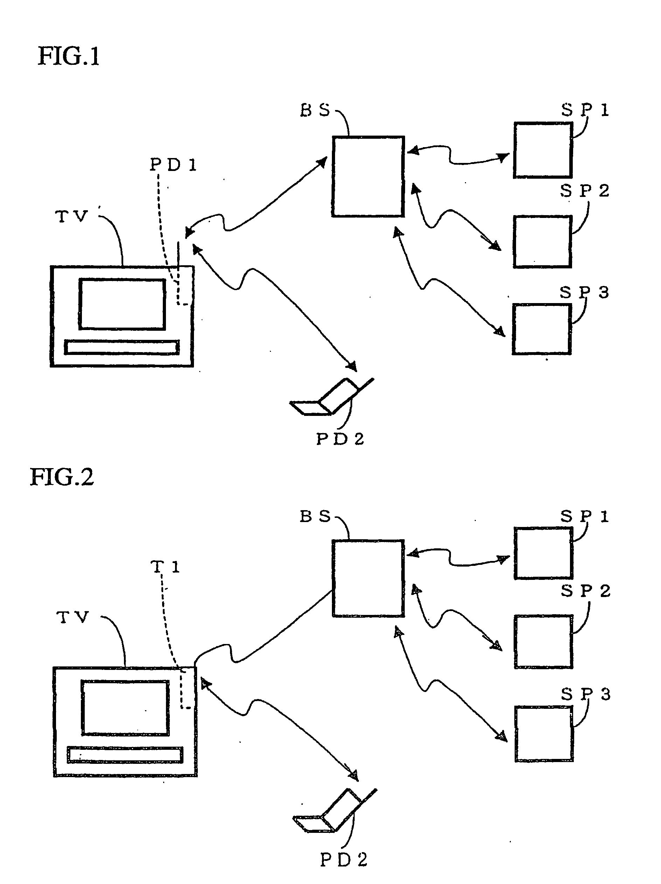

FIG. 1 is a block diagram showing a system which uses a communication terminal of a first embodiment according to the present invention. The drawing shows a charging system for a television set TV (appliance) accessible to the Internet. The television set TV comprises a built-in type (embedded type) first communication terminal PD1 (a first mobile communication terminal), through which communication with a charging management company BS can be performed. The charging management company BS is, for example, a communication service company, which performs charging management for a plurality of commodity providing companies SP1-SP3 (three companies are shown in the drawing, but the number is arbitrary) according to the purchasing state of commodities on the appliances TVs. The commodity providing companies SP1-SP3 provide various kinds of commodities (examples are shown in Table 1) to the television set TV through the Internet. The commodity providing companies include financial service institutions, securities firms, real estate companies, and firms related with mass communication such as satellite broadcasting, CATV (Cable Television) broadcasting, newspapers, radio broadcasting, and publication.

**Table 1**

| Examples of Offered Commodities | |
|---|---|
| Offered Commodities | |
| Internet Contents | services for providing commodity information, corporate information and other information |
| | Music distribution services |
| | Book distribution services |
| | Game distribution services |
| | Distribution services of images such as photographs, and paintings |
| Internet malls, shop channels | Various kinds of commodities and cash vouchers |
| Financial services | Internet banking |
| Securities services | Intermediation for sales of marketable securities |
| Real estate services | Intermediation for sales of real estates |
| Services for mass communication | Satellite broadcasting, and CATV |
| | Newspapers, and publication |
| | Radio broadcasting |

As mentioned above, if customer authentication can be performed easily and reliably, dealing commodities are not limited and economic activities can be promoted remarkably.

When each customer should be charged on the above purchasing of commodities, for example, in such a case that many and unspecified customers can use a television set TV, "control transfer mode" to transfer the control on charging to the customer side may be set. When "control transfer mode" is set, it is impossible to use television sets TV in such a way that owners or managers of television sets are charged. A customer (not shown) can use an appliance TV with the expense chargeable on the customer by calling a mobile communication terminal PD1 from a second communication terminal PD2 (portable telephone/a second mobile communication terminal) owned by the customer and inputting a predetermined code (number). Thereby, if authentication of the second mobile communication terminal PD2 is guaranteed, the customer authentication such that the second mobile communication terminal PD2 itself is dealt as an ID (identification) becomes possible, and proper charging can be realized. Moreover, operations for the customer authentication are comparatively simple, and the convenience is not reduced.

Then, the information on charging is sent from the first mobile communication terminal PD1 to the charging management company BS. Therefore, there is no need to change the configuration of the appliance TV for sending the charging information, whether the "control transfer mode" is set or not.

FIG. 2 shows a second embodiment, where a first communication terminal T1 of a fixed line is used, instead of the first mobile communication terminal PD1 in the first embodiment. But, other components are similar to the first embodiment and the description thereof will be eliminated. By the above configuration, even when the line state for the mobile communication is not good at the location of the appliance TV, the communication terminal according to the present invention can be applied. Moreover, there may be used a configuration where the appliance TV itself works as the first communication terminal T1 and a telephone set TV (T1) of a fixed line is used, with the second communication terminal PD2 being dealt as the ID.

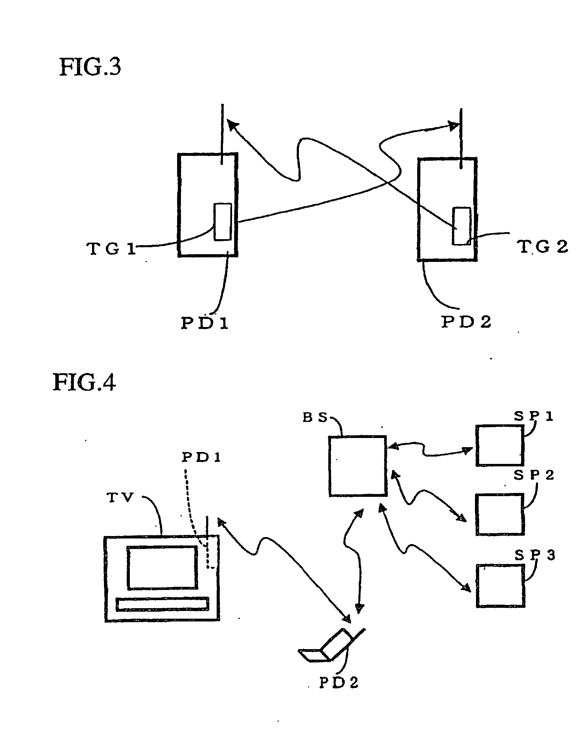

FIG. 3 shows variations of the first mobile communication terminal PD1, and the second mobile communication terminal PD2 according to the first embodiment. Label tags TG1, TG2 are built in the first and second mobile communication terminals PD1, PD2, respectively, and send specific signals of the first and second mobile communication terminals PD1, PD2, respectively. The signals of label tags TG1, TG2 are received by antennas of the mobile communication terminal PD2, PD1, respectively. When they detect each other, the appliance TV sends a piece of charging information for charging the second mobile communication terminal PD2 to the charging management company BS. That is, the first and second mobile communication terminals PD1, PD2 detect electric indexes generated by the label tags TG2, TG1, respectively, as non-contact sensors. As described above, the terminals PD1, PD2 are automatically detected each other, and. thereby, complex operations such as calling the first mobile communication terminal PD1 from the second mobile communication terminal PD2 and inputting codes are eliminated.

It is evident that wireless communication according to the BLUETOOTH standards may be used instead of communication by the label tags. Moreover, the charging management company BS may be the same as the commodity providing company to cause the charging system to be simplified.

FIG. 4 shows a third embodiment, and when the appliance TV is configured to be used with the expense chargeable on the customer, the charging information is sent from the appliance TV to the second mobile communication terminal PD2, further from the second mobile communication terminal PD2 to the charging management company BS. Thereby, charging operations for charging both on commodities and on the second mobile communication terminal can be simultaneously performed.

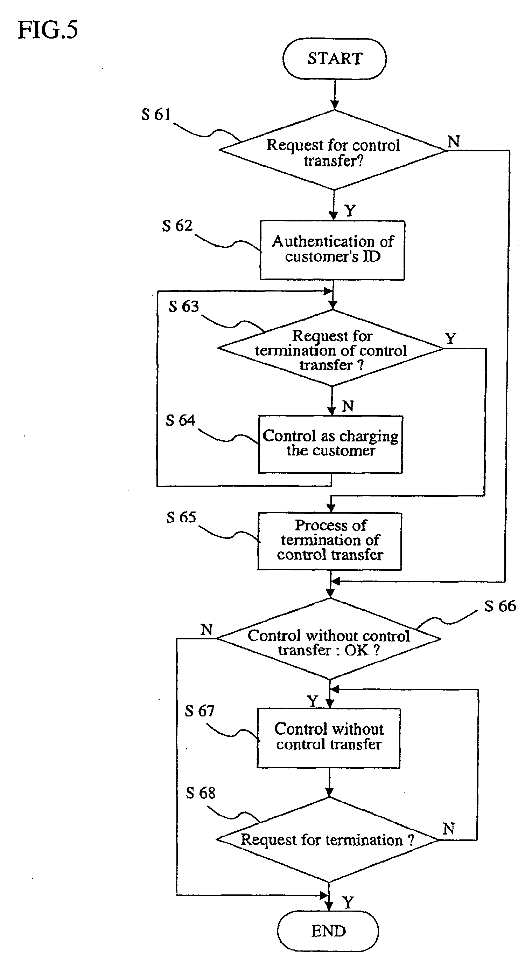

FIG. 5 is a flow chart showing the charging control in the appliance TV. In the first place, by such an operation that the second mobile communication terminal PD2 calls the first mobile communication terminal PD1, it is judged whether control transfer is requested or not (step S61). When there is no request, it is judged whether an operation without the control transfer is permitted or not (step S66). When the operation without the control transfer is permitted, the operation without control transfer is performed (step S67). When the operation of the appliance should be continued, the operation returns to step S67. When the operation of the appliance should be terminated (step S68), the process is terminated.

When there is a request for control transfer, authentication of the ID with regard to the charging of a customer is performed (step S62), based on a signal from the second mobile communication terminal PD2; charging control for charging the customer (the second mobile communication terminal PD2) is performed (step S64); and whether there is a request for termination of control transfer or not is judged at a predetermined timing (step S63). When there is a request for the termination, the control transfer is terminated (S65), and the operation proceeds to step S66. When there is no request for the termination, the operation returns to step S64.

However, the present invention is not limited to the above embodiments.

For example, it is evident that the present invention can be applied to any appliances which can perform the charging by using communication terminals other than the appliances TV.

Moreover, unauthorized use of the appliances can be prevented by setting a mode such that the above appliances can not be used unless the customer is charged on commodities.

In addition, the above charging manager may be a commodity supplier who provides the above commodities, or may be different from the commodity supplier and performs charging management for the above commodity supplier. In the former case, the charging system can be simplified, and in the latter case, the load of the commodity supplier can be reduced.

Here, the commodities or services may be information providing services, book distribution services, commodity sales services on networks, services for providing programs of mass communication, financial services, intermediation services for sales of marketable securities, cash vouchers and so on.

Moreover, the appliances may be a piece of chargeable equipment of toll facilities, and the commodities may be the use of the chargeable facilities. The facilities may be, for example, toll roads.

### INDUSTRIAL APPLICABILITY

As mentioned above, according to the communication terminal of the present invention, proper charging can be realized, securing the convenience of the appliances by which chargeable commodities are provided.

## Claims

1. A communication terminal comprising receiving means for receiving specific information with regard to charging; sending means for sending information on charging to a charging manager; and service means for providing services based on said information on charging.

2. The communication terminal according to claim 1, **characterized in that** said receiving means performs receiving by using an original communication function of said communication terminal.

3. The communication terminal according to claim 1, **characterized in that** said receiving means performs receiving independently of an original communication function of said communication terminal.

4. The communication terminal according to claim 3, **characterized in that** said original communication function of said communication terminal is performed through a fixed line.

5. A communication terminal, **characterized in that** said communication terminal comprises a first sending means for sending specific information on charging, independently of an original communication function.

6. The communication terminal according to claim 5, **characterized in that** said communication terminal comprises a second sending means for sending information on charging to a charging manager by means of an original communication function.
